# EUROPEAN PATENT APPLICATION

(11) **EP 2 472 899 A2**
(43) Date of publication of application: **04.07.2012**
(21) Application number: 11188913.5
(22) Date of filing: 11.11.2011
(51) Int. Cl.: H04N 21/63

(54) **Method and system for displaying multimedia services from a server to multiple clients**

(30) Priority: 30.12.2010 IN CH40312010
(71) Applicant: Samsung Electronics Co., Ltd., Suwon-si, Gyeonggi-do 442-742 (KR)
(72) Inventor: N, Niyaz, 691004 Kerala (IN); Chaudhari, Sushil, 229001 RaeBareli (UP) (IN); Khullar, Yogesh, 144205 Punjab (IN); Mahajan, Gaurav, 160022 Chandigarh (IN)
(74) Representative: Fearnside, Andrew Simon

(57) **Abstract**

A method and system for displaying multimedia services from a server to multiple clients is provided. The method includes transmitting control information by the server to one or more clients. The method also includes assigning a channel to the one or more clients. The method further includes transmitting display information to the one or more clients using the channel. Further, the method includes receiving update information from the one or more clients using a back channel. Moreover, the method includes modifying the update information by the server and transmitting the update information to the one or more clients using a forward channel. The system includes a server and one or more clients.

## Description

### FIELD OF INVENTION

This invention relates to the field of wireless communication, more particularly, to a method and system for displaying multimedia services from a server to multiple clients.

### BACKGROUND

Typically, an internet protocol television (IPTV) is a system used for delivering multimedia services, for example audio and video information, across an internet protocol (IP) based network. Examples of the multimedia services include, but are not limited to, live television (TV), video on demand and time shifted programming. The multimedia services are delivered to a subscriber using the IP based network. The multimedia services provided to the subscriber ensures providing an entertainment experience to the subscriber, and a business environment for advertisers and customers. Increase in subscribers has led to low broadband penetration and reliable transmission of the audio and video information is also affected due to increased cost for cables.

In light of the foregoing discussion there is a need for an efficient technique for displaying the multimedia services from a server to multiple clients or subscribers.

### SUMMARY

Embodiments of the present disclosure described herein provide a method and system for displaying multimedia services from a server to multiple clients.
According to the present invention there is provided an apparatus and method as set forth in the appended claims. Other features of the invention will be apparent from the dependent claims, and the description which follows.

An example of a method of displaying multimedia services from a server to multiple clients includes transmitting control information by the server to one or more clients. The control information is encoded. The method also includes assigning a channel to the one or more clients. The method further includes transmitting display information to the one or more clients using the channel. Further, the method includes receiving update information from the one or more clients using a back channel. The method also includes modifying the update information by the server. Moreover, the method includes transmitting the update information to the one or more clients using a forward channel.

An example of a system for displaying multimedia services from a server to multiple clients includes the server and one or more clients. The server is configured to transmit control information by the server to one or more clients, to assign a channel to the one or more clients, to transmit display information to the one or more clients using the channel, to receive update information from the one or more clients using a back channel, to modify the update information by the server, and to transmit the update information to the one or more clients using a forward channel. The one or more clients are configured to display the display information transmitted by the server through a network.

### BRIEF DESCRIPTION OF FIGURES

The accompanying figure, similar reference numerals may refer to identical or functionally similar elements. These reference numerals are used in the detailed description to illustrate various embodiments and to explain various aspects and advantages of the present disclosure.

FIG. 1 illustrates a block diagram of a system for displaying multimedia services from a server to multiple clients, in accordance with one embodiment;

FIG. 2 is a block diagram of a server, in accordance with one embodiment; and

FIG. 3 is a flowchart illustrating a method of displaying multimedia services from a server to multiple clients, in accordance with one embodiment.

Persons skilled in the art will appreciate that elements in the figures are illustrated for simplicity and clarity and may have not been drawn to scale. For example,
the dimensions of some of the elements in the figure may be exaggerated relative to other elements to help to improve understanding of various embodiments of the present disclosure.

### DETAILED DESCRIPTION

It should be observed the method steps and system components have been represented by conventional symbols in the figure, showing only specific details which are relevant for an understanding of the present disclosure. Further, details may be readily apparent to person ordinarily skilled in the art may not have been disclosed. In the present disclosure, relational terms such as first and second, and the like, may be used to distinguish one entity from another entity, without necessarily implying any actual relationship or order between such entities.

Embodiments of the present disclosure described herein provide a method and system for displaying multimedia services from a server to multiple clients.

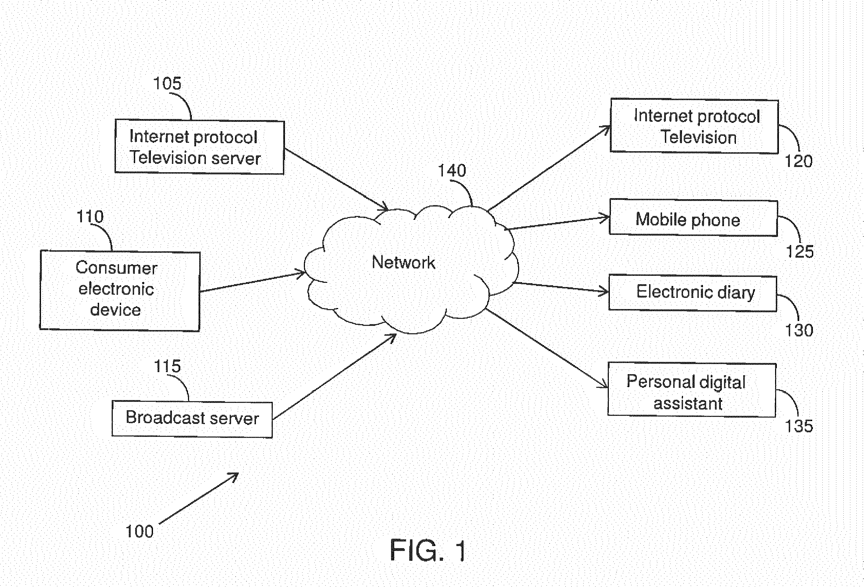

FIG. 1 illustrates a block diagram of a system 100 for displaying multimedia services from a server to multiple clients, in accordance with one embodiment. The system 100 includes a server, for example an internet protocol television (IPTV) server 105, a consumer electronic (CE) device 110 and a broadcast server 115 at a transmitter end. Examples of the CE device 110 include, but are not limited to, a mobile phone. The system 100 further includes one or more clients, for example an IPTV 120, a mobile phone 125, an electronic diary 130, and a personal digital assistant (PDA) 135 at a receiver end. The system 100 also includes a network 140 that connects the server and the clients. The clients are embedded display devices that are connected across the network 140. Examples of the network 140 include, but are not limited to, a wireless network and ethernet.

The server controls audio and video information that is transmitted across the network 140 using control information. The server transmits the control information across the network 140 to the clients. The control information indicates contents of the audio and video information that is transmitted across the network 140. The clients are grouped depending on various parameters. Examples of the various parameters can include, but are not limited to, an interest group, a display location and content distribution. The clients can also be grouped based on an ordered position, orientation, shape and geometry. The control information includes information pertaining to the interest group, the display location, the content distribution, the ordered position, the orientation, the shape and the geometry of the clients. The control information is transmitted by the server to the clients through an electronic program guide (EPG), a data packet, a reserve bit in the data packet, or a null packet.

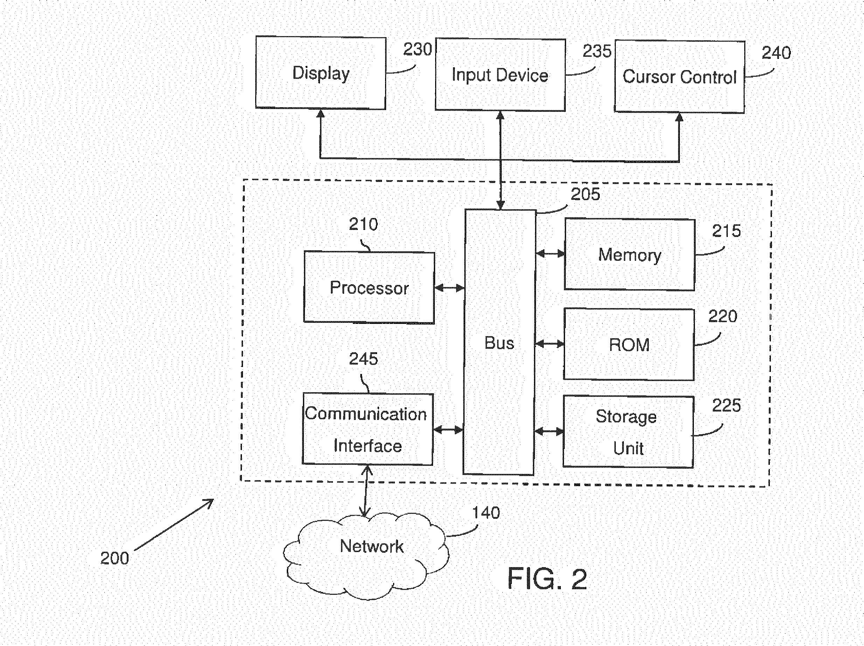

FIG. 2 is a block diagram of a server 200, in accordance with one embodiment. The server 200 includes a bus 205 for communicating information, and a processor 210 coupled with the bus 205 for processing the information. The server 200 also includes a memory 215, for example a random access memory (RAM) coupled to the bus 205 for storing information required by the processor 210. The memory 215 can be used for storing temporary information required by the processor 210. The server 200 further includes a read only memory (ROM) 220 coupled to the bus 205 for storing static information required by the processor 210. A storage unit 225, for example a magnetic disk, hard disk or optical disk, can be provided and coupled to the bus 205 for storing the information.

The server 200 can be coupled via the bus 205 to a display 230, for example a cathode ray tube (CRT) or liquid crystal display (LCD), for displaying the information.
An input device 235, including various keys, is coupled to the bus 205 for communicating information to the processor 210. In some embodiments, a cursor control 240, for example a mouse, a trackball, a joystick, or cursor direction keys for communicating information to the processor 210 and for controlling cursor movement on the display 230 can also be present.

In some embodiments, the steps of the present disclosure are performed by the server 200 using the processor 210 in conjunction with one or more clients. The information can be read into the memory 215 from a machine-readable medium, for example the storage unit 225. In alternative embodiments, hard-wired circuitry can be used in place of or in combination with software instructions to implement various embodiments.

The term machine-readable medium can be defined as a medium providing data to a machine to enable the machine to perform a specific function. The machinereadable medium can be a storage media. Storage media can include non-volatile media and volatile media. The storage unit 225 can be a non-volatile media. The memory 215 can be a volatile media. All such media must be tangible to enable the instructions carried by the media to be detected by a physical mechanism that reads the instructions into the machine.

Examples of the machine readable medium includes, but are not limited to, a floppy disk, a flexible disk, hard disk, magnetic tape, a CD-ROM, optical disk, punchcards, papertape, a RAM, a PROM, EPROM, and a FLASH-EPROM.

The server 200 also includes a communication interface 245 coupled to the bus 205 for enabling data communication with the clients via a network, for example the network 140. Examples of the communication interface 245 include, but are not limited to, an integrated services digital network (ISDN) card, a modem, a local area network (LAN) card, an infrared port, a Bluetooth port, a zigbee port, and a wireless port.

In some embodiments, the server 200 transmits control information that is encoded to the clients. The server 200 then assigns a channel to the clients and transmits display information to the clients using the channel. The server 200 on receiving update information from the clients using a back channel then modifies the update information. The server 200 further transmits the update information to the clients using a forward channel.

In some embodiments, the processor 210 including one or more processing units can perform one or more functions of the server 200. The processing units are hardware circuitry performing specified functions.

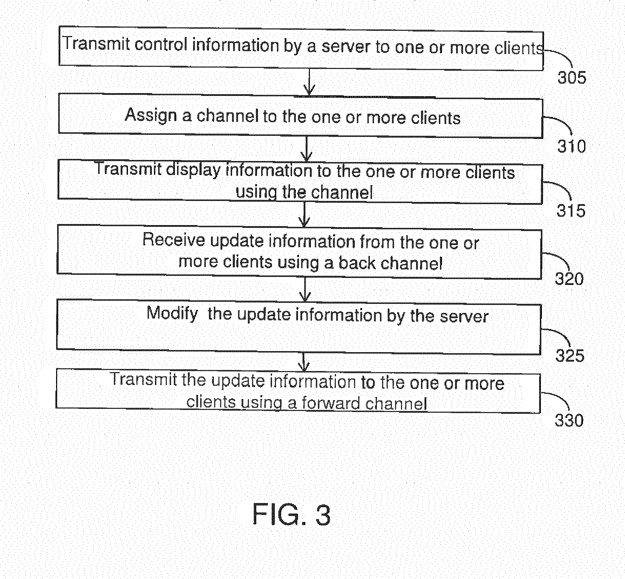

FIG. 3 is a flowchart illustrating a method of displaying multimedia services from a server to multiple clients, in accordance with one embodiment.

At step 305, the server transmits control information to one or more clients. The clients include a plurality of network connected embedded display devices. The control information transmitted by the server across a network to the clients includes information pertaining to interest group, display location, content distribution, ordered position, orientation, shape and geometry of the clients. The control information is transmitted through one of an electronic program guide (EPG), a data packet, a reserve bit in the data packet and a null packet.

The control information also includes information about a channel available for the clients connected across the network. The control information is further encoded by the clients. The control information indicates audio and video information to be displayed by the client.

At step 310, the server assigns a channel to the clients. The audio and video information is transmitted to the clients connected across the network through the channel. Examples of the channel include a broadcast channel and an on demand channel. In case of the on demand channel, the clients connected across the network in a group listens to the on demand channel simultaneously when the server and the clients display the audio and video information present in the on demand channel. In case of the broadcast channel, the server transmits the audio and video information present in the broadcast channel to the clients based on a unicast method or a broadcast method. The channel provided can be common to the clients connected across the network or only to a group of clients. The information present in the channel displayed by the clients can be a video, part of the video, or parts of different videos. The information associated with the video can also be cropped by the clients.

At step 315, the server transmits the display information, including the audio and video information, to the clients using the channel.

The clients receive the display information which is further displayed. The display information can be further decoded, scaled, cropped and rotated by either the server or the clients.

At step 320, the server receives update information from the clients. The update information is transmitted to the server using a back channel. The back channel can be a wireless network or ethernet. Examples of the update information include, but are not limited to, orientation information, resolution information, preference information, dimension information, display resolution, audio mute, position of the display information in the group and audio play parameters. The server receives the update information to identify the geometry of the clients connected across the network. The update information can also include the orientation information of an individual client. The update information can be acquired by taking inputs from sensors or by manual methods.

At step 325, the server on receiving the update information from the clients, modifies the update information. The geometry of the clients is hence updated dynamically. The update information regarding the geometry of the individual client or group of the clients can be encoded as a null packet along with the audio and video information to be displayed by the individual client or the group of clients. The update information can also be in the data packet or a group of pictures (GOP).

At step 330, the update information is transmitted to the clients using a forward channel. A sensor can be used to supply data to the server using the back channel, for automatic orientation change in the clients connected across the network. Sensors and radio frequency identification (RFID) can be used to sense a nearby client and the information thus sensed is transmitted to the server using the back channel. The geometry of the clients connected across the network can be changed dynamically. The dynamic change in the geometry of the embedded display devices connected across the network is possible through an initiation either by the server or the clients. The initiation can be a timed event or a user event.

In the preceding specification, the present disclosure and its advantages have been described with reference to specific embodiments. However, it will be apparent to a person of ordinary skill in the art that various modifications and changes can be made, without departing from the scope of the present disclosure, as set forth in the claims below. Accordingly, the specification and figures are to be regarded as illustrative examples of the present disclosure, rather than in restrictive sense. All such possible modifications are intended to be included within the scope of the present disclosure.
Although a few preferred embodiments have been shown and described, it will be appreciated by those skilled in the art that various changes and modifications might be made without departing from the scope of the invention, as defined in the appended claims.

## Claims

1. A method of displaying multimedia services from a server to multiple clients, the method comprising:
transmitting control information by the server to one or more clients, wherein the control information is encoded;
assigning a channel to the one or more clients;
transmitting display information to the one or more clients using the channel;
receiving update information from the one or more clients using a back channel;
modifying the update information by the server; and
transmitting the update information to the one or more clients using a forward channel.

2. The method as claimed in claim 1, wherein the server comprises one of a consumer electronic (CE) device and an internet protocol television (IPTV).

3. The method as claimed in claim 1 or 2, wherein the one or more clients comprises a plurality of embedded display devices interconnected through a network using one or more network interfaces.

4. The method as claimed in any of the preceding claims, wherein the one or more clients are grouped on a plurality of parameters comprising an interest group, a display location and content distribution.

5. The method as claimed in any of the preceding claims, wherein the control information comprises channel selection information, geometry for display information, and display parameters.

6. The method as claimed in any of the preceding claims, wherein the control information is transmitted by one of electronic program guides (EPGs), data packets, reserve bits in the data packets, encoded null packets and specified streams.

7. The method as claimed in any of the preceding claims, wherein assigning the channel comprises selecting the display information from a set of streams depending on the interest group, the display location and the content distribution.

8. The method as claimed in any of the preceding claims, wherein the display information comprises video, broadcast stream, live video and an audio stream.

9. The method as claimed in any of the preceding claims, wherein the display information is selected from the set of streams by one of scanning through the EPG and using a manual selection list.

10. The method as claimed in claim 1, wherein transmitting the display information to the one or more clients comprises receiving the display information by the one or more clients by tuning to a channel frequency of the channel.

11. The method as claimed in claim 10, wherein the channel is one of a common channel for the one or more clients, a common channel for a group of the one or more clients, and an individual channel for each of the one or more clients.

12. The method as claimed in claim 10 or 11, wherein tuning to the channel frequency is performed for one of an on-demand channel request and a slewed time based channel request.

13. A system for displaying multimedia services from a server to multiple clients, the system comprising:
the server configured to
transmit control information by the server to one or more clients, wherein the control information is encoded;
assign a channel to the one or more clients;
transmit display information to the one or more clients using the channel;
dynamically receive update information from the one or more clients using a back channel;
modify the update information by the server; and
transmit the update information to the one or more clients using a forward channel; and
the one or more clients configured to display the display information transmitted by the server through a network.

14. The system as claimed in claim 13, wherein the server comprises one of a consumer electronic (CE) device and an internet protocol television (IPTV).

15. The system as claimed in claim 13 or 14, wherein the one or more clients comprises a plurality of embedded display devices interconnected through a network using one or more network interfaces.
